(19) **Europäisches Patentamt European Patent Office Office européen des brevets**

(11) **EP 3 629 063 B1**

(12) **FASCICULE DE BREVET EUROPEEN**

(45) Date de publication et mention de la délivrance du brevet:
**10.03.2021 Bulletin 2021/10**

(51) Int Cl.:
***G01T 1/169*** *(2006.01)* ***G01T 1/29*** *(2006.01)*

(21) Numéro de dépôt: **19199590.1**

(22) Date de dépôt: **25.09.2019**

(54) **SYSÈME DE SPÉCTROMETRIE, PROCÉDÉ DE SPÉCTROMETRIE ET PRODUIT PROGRAMME D'ORDINATEUR ASSOCIÉS**

SPEKTROMETRIESYSTEM, ENTSPRECHENDES SPEKTROMETRIEVERFAHREN UND COMPUTERPROGRAMMPRODUKT

SPECTROMETRY SYSTEM, ASSOCIATED SPECTROMETRY METHOD AND COMPUTER PROGRAM PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2018 FR 1858897**

(43) Date de publication de la demande:
**01.04.2020 Bulletin 2020/14**

(73) Titulaire: **COMMISSARIAT À L'ÉNERGIE ATOMIQUE ET AUX ÉNERGIES ALTERNATIVES 75015 Paris (FR)**

(72) Inventeurs:
- **COULON, Romain 58400 Chaulgnes (FR)**
- **DUMAZERT, Jonathan 30100 Ales (FR)**
- **GARTI, Sara 91300 Massy (FR)**
- **LECOMTE, Quentin 78280 Guyancourt (FR)**

(74) Mandataire: **Brevalex 95, rue d'Amsterdam 75378 Paris Cedex 8 (FR)**

(56) Documents cités:
**WO-A1-01/61378 US-A1- 2010 090 115**

- **SAINT GOBAIN CRYSTALS: "Compton Suppressors, Detectors for suppressing unwanted background", INTERNET CITATION, 2002, pages 1-2, XP002535264, Extrait de l'Internet: URL:http://www.detectors.saint-gobain.com/ Media/Documents/S0000000000000001004/SGC _C oincidence_Anti-Coincidence_Application.pd f [extrait le 2009-07-03]**

EP 3 629 063 B1

**Description**

**DOMAINE TECHNIQUE**

La présente invention concerne un système de spectrométrie comprenant un étage de détection comportant un détecteur principal et au moins un détecteur auxiliaire, le détecteur principal étant configuré pour détecter au moins des photons présentant une énergie appartenant à une plage d'énergie principale dans le domaine X et/ou Y, et pour délivrer un signal de détection principal comportant des impulsions principales, chaque impulsion principale étant représentative d'une interaction du détecteur principal avec un photon de la plage d'énergie principale, chaque détecteur auxiliaire étant configuré pour détecter au moins des photons présentant une énergie appartenant à une plage d'énergie auxiliaire dans le domaine X et/ou Y, et pour délivrer un signal de détection auxiliaire comportant des impulsions auxiliaires, chaque impulsion auxiliaire d'un signal de détection auxiliaire donné étant représentative d'une interaction du détecteur auxiliaire correspondant avec un photon de la plage d'énergie auxiliaire associée.

L'invention concerne également un procédé de spectrométrie et un produit programme d'ordinateur.

L'invention s'applique notamment à la détection et la mesure de faibles traces d'isotopes radioactifs, c'est-à-dire la détection d'isotopes radioactifs présentant une activité faible au regard d'un bruit de fond imposé par des conditions expérimentales données (par exemple du même ordre de grandeur), et la mesure de ladite activité.

**ÉTAT DE LA TECHNIQUE ANTÉRIEURE**

De façon connue, le processus d'atténuation des rayonnements X et Y dans la matière, par exemple dans un détecteur, est principalement régi par deux effets :

- l'effet photoélectrique, par lequel un photon incident dépose l'intégralité de son énergie dans le détecteur, ce qui se traduit, dans le signal électrique de détection issu du détecteur, par une impulsion dite « impulsion d'absorption totale », participant à un « pic d'absorption totale » dans le spectre d'un signal de détection issu du détecteur, exploitable dans le cadre de la caractérisation d'une source ayant émis ledit photon ; et
- l'effet Compton, par lequel un photon incident dépose une partie seulement de son énergie dans le détecteur en le traversant, ce qui se traduit, dans le spectre du signal électrique de détection, par un continuum qui est assimilable à du bruit et qui est susceptible de masquer, dans ledit spectre, des pics d'absorption totale de faible amplitude générés par effet photoélectrique.

Il en résulte que l'effet Compton est indésirable, dans la mesure où il rend plus difficile la caractérisation de la source. De US2010/090115 A1 est connu un système de spectrométrie comprenant un étage de détection comportant un détecteur principal et au moins un détecteur auxiliaire, le détecteur principal étant configuré pour détecter au moins des photons présentant une énergie appartenant à une plage d'énergie principale dans le domaine X et/ou Y, et pour délivrer un signal de détection principal comportant des impulsions principales, chaque impulsion principale étant représentative d'une interaction du détecteur principal avec un photon de la plage d'énergie principale, chaque détecteur auxiliaire étant configuré pour détecter au moins des photons présentant une énergie appartenant à une plage d'énergie auxiliaire dans le domaine X et/ou Y, et pour délivrer un signal de détection auxiliaire comportant des impulsions auxiliaires, chaque impulsion auxiliaire d'un signal de détection auxiliaire donné étant représentative d'une interaction du détecteur auxiliaire correspondant avec un photon de la plage d'énergie auxiliaire associée, le système de spectrométrie comportant également un organe d'acquisition configuré pour acquérir le signal de détection principal en un signal de détection principal acquis, et chaque signal de détection auxiliaire en un signal de détection auxiliaire acquis correspondant.

Il est également connu d'utiliser des systèmes de spectrométrie dans lesquels un détecteur auxiliaire est associé à un détecteur principal, et de construire un signal hybride à partir du signal de détection issu de chacun parmi le détecteur principal et le détecteur auxiliaire.

Le signal hybride correspond au signal de détection du détecteur principal, duquel a été supprimée chaque impulsion telle que, à la même date, il existe une impulsion coïncidente dans le signal de détection issu du détecteur auxiliaire. Ainsi est partiellement filtré le bruit de diffusion Compton imputable à l'activité de la source, c'est-à-dire imputable aux photons qui sont issus de la source et qui déposent une partie de leur énergie dans le détecteur principal et une autre partie de leur énergie dans le détecteur auxiliaire.

Néanmoins, un tel système de spectrométrie ne donne pas entière satisfaction.

En effet, le signal de détection issu d'un système de spectrométrie X et/ou $\Upsilon$, dans lequel un détecteur principal et un détecteur auxiliaire sont associés, peut être décomposé en plusieurs composantes :

- le signal utile, qui est la composante produite par le dépôt d'énergie totale d'un photon émis par la source dans le détecteur principal (formant donc une impulsion d'absorption totale) ;

- le bruit de diffusion de type I, qui comprend :

  • une composante I.a, représentative d'une première interaction d'un photon issu de la source avec le détecteur principal par diffusion Compton, puis d'une interaction secondaire avec le détecteur auxiliaire ;
  • une composante I.b, représentative d'une première interaction d'un photon issu de la source avec le détecteur auxiliaire par diffusion Compton, puis d'une interaction secondaire avec le détecteur principal ;
  • une composante I.c, représentative d'une première interaction d'un photon issu de l'environnement avec le détecteur principal par diffusion Compton, puis d'une interaction secondaire avec le détecteur auxiliaire ;
  • une composante I.d, représentative d'une première interaction d'un photon issu de l'environnement avec le détecteur auxiliaire par diffusion Compton, puis d'une interaction secondaire avec le détecteur principal ;

- le bruit de diffusion de type II, qui comprend :

  • une composante II.a, représentative d'une interaction d'un photon issu de la source avec le détecteur principal par diffusion Compton, sans interaction secondaire avec le détecteur auxiliaire ;
  • une composante II.b, représentative d'une première interaction d'un photon issu de la source avec l'environnement par diffusion Compton, puis d'une interaction secondaire avec le détecteur principal ;
  • une composante II.c, représentative d'une interaction d'un photon issu de l'environnement avec le détecteur principal, sans interaction secondaire avec le détecteur auxiliaire.

En ce qui concerne la composante II.b, les photons sont considérés comme provenant de l'environnement, car ayant perdu leur corrélation à la source.

Bien que le traitement fondé sur la construction du signal hybride permette de rejeter, c'est-à-dire filtrer, le bruit de diffusion de type I, les systèmes de spectrométrie connus ne sont pas en mesure de rejeter le bruit de diffusion de type II.

Un but de l'invention est donc de proposer un système de spectrométrie opérant dans le domaine X et/ou Y, et qui permette une meilleure réjection du bruit de diffusion, en particulier du bruit de diffusion de type II, que les systèmes de spectrométrie connus.

## EXPOSÉ DE L'INVENTION

A cet effet, l'invention a pour objet un système de spectrométrie du type précité, comportant, en outre, un étage de traitement comprenant :

- un organe d'acquisition configuré pour acquérir le signal de détection principal en un signal de détection principal acquis, et chaque signal de détection auxiliaire en un signal de détection auxiliaire acquis correspondant ;
- un organe de calcul configuré pour :

  • détecter les impulsions principales dans le signal de détection principal acquis et les impulsions auxiliaires dans chaque signal de détection auxiliaire acquis ;
  • déterminer, pour chaque impulsion principale, une énergie principale correspondante et, pour chaque impulsion auxiliaire, une énergie auxiliaire correspondante ;
  • calculer un premier spectre en fonction du signal de détection principal acquis et, éventuellement, de chaque signal de détection auxiliaire acquis ;
  • calculer au moins un deuxième spectre en fonction d'au moins un signal de détection auxiliaire acquis et, éventuellement, du signal de détection principal acquis ;

- une mémoire configurée pour stocker un modèle numérique associant une énergie donnée d'un photon incident parvenant à l'étage de détection, à :

  • une énergie principale déposée par le photon incident dans le détecteur principal, dont la valeur dépend de ce que le photon incident est issu de la source à caractériser ou d'un environnement distinct de la source ; et
  • une énergie auxiliaire déposée par le photon incident dans chaque détecteur auxiliaire, dont la valeur dépend de ce que le photon incident est issu de la source à caractériser ou de l'environnement ;

l'organe de calcul étant, en outre, configuré pour calculer un vecteur isotopique et/ou un flux de bruit comme étant chacun une solution d'un jeu d'équations comprenant :

- une première équation dans laquelle le premier spectre s'exprime comme la somme du produit du vecteur isotopique par un premier paramètre du modèle numérique d'une part, et du produit du flux de bruit par un deuxième paramètre du modèle numérique d'autre part ; et
- au moins une deuxième équation dans laquelle chaque deuxième spectre s'exprime comme la somme du produit du vecteur isotopique par un troisième paramètre du modèle numérique d'une part, et du produit du flux de bruit par un quatrième paramètre du modèle numérique d'autre part ;

  le vecteur isotopique étant un vecteur dont chaque composante d'indice i est représentative d'un nombre de photons émis par la source à caractériser, par unité de temps, dans un intervalle d'énergie $E_i$ associé à ladite composante d'indice i, lesdits photons ayant interagi exclusivement avec le détecteur principal et ayant déposé entièrement leur énergie dans le détecteur principal,

  le flux de bruit étant un vecteur dont chaque composante d'indice i est représentative d'un nombre de photons, par unité de temps, provenant de l'environnement, dans un intervalle d'énergie $E_i$ associé à ladite composante d'indice i, et incidents sur l'étage de détection.

En effet, dans la mesure où le calcul du vecteur isotopique et du flux de bruit met en œuvre des paramètres du modèle numérique, le système de spectrométrie selon l'invention autorise une réjection du bruit qui s'appuie sur un modèle complet dudit système de spectrométrie, qui incorpore notamment les réponses du détecteur principal et de ou des détecteur(s) auxiliaire(s).

La modélisation conjointe du détecteur principal et de ou des détecteur(s) auxiliaire(s) et de leur comportement autorise, en particulier, la réjection des bruits issus des diffusions par l'environnement du système de spectrométrie (composantes II.b et II.c), réjection que les systèmes de spectrométrie de l'état de la technique ne sont pas aptes à réaliser.

De façon avantageuse, le calcul du premier spectre en fonction du signal de détection principal acquis et de chaque signal de détection auxiliaire acquis autorise une réjection des composantes de bruit de diffusion de type I.

Ainsi, grâce au système de spectrométrie selon l'invention, une spectrométrie avec un niveau de bruit plus faible que celui autorisé par les systèmes de spectrométrie de l'état de la technique est possible, notamment grâce à un filtrage des composantes de bruit qui ne pouvaient être discriminées par les approches connues.

Suivant d'autres aspects avantageux de l'invention, le système de spectrométrie comporte une ou plusieurs des caractéristiques suivantes, prise(s) isolément ou suivant toutes les combinaisons techniquement possibles :

- l'équation relative au premier signal s'écrit :

$$S_1 = F_1 A + \sum_{\theta=1}^{n_\theta} W_{1,\theta} B_\theta$$

où $S_1$ est le premier spectre, égal au spectre du signal de détection principal acquis ;
$F_1$ est une matrice dont un terme général $f_{1,j,i}$ est égal à la probabilité qu'un photon incident d'énergie $E_i$ et issu de la source à caractériser induise un dépôt d'énergie $E_j$ dans le détecteur principal ;
$A$ est le vecteur isotopique ;
ne est le nombre de détecteurs auxiliaires, chaque détecteur auxiliaire d'indice $\theta$ étant associé à un secteur d'angles géométriques d'incidence propre noté $\Delta\theta$ ;
$W_{i,e}$ est une matrice dont un terme général $w_{1,j,i,\theta}$ est égal à la probabilité qu'un photon provenant de l'environnement, incident sur l'étage de détection selon le secteur d'angles géométriques d'incidence $\Delta\theta$, et présentant une énergie $E_i$ induise un dépôt d'énergie $E_j$ dans le détecteur principal ; et
$B_e$ est la partie du flux de bruit correspondant à des photons incidents sur l'étage de détection selon le secteur d'angles géométriques d'incidence $\Delta\theta$ ;

- le calculateur est configuré pour calculer un signal hybride, le signal hybride étant obtenu à partir du signal de détection principal, duquel a été supprimée chaque impulsion principale telle que, à la même date, il existe une impulsion auxiliaire coïncidente dans au moins un signal de détection auxiliaire acquis, un deuxième spectre parmi l'au moins un deuxième spectre étant le spectre du signal hybride ;
- une deuxième équation parmi l'au moins une deuxième équation s'écrit :

$$S'_1 = F'_1 A + \sum_{\theta=1}^{n_\theta} W'_{1,\theta} B_\theta$$

où $S'_1$ est un deuxième spectre parmi l'au moins un deuxième spectre, égal au spectre du signal hybride ;

$F'_1$ est une matrice dont un terme général $f'_{1,j,i}$ est égal à la probabilité qu'un photon incident d'énergie $E_i$ et issu de la source induise un dépôt d'énergie $E_j$ dans le détecteur principal sachant qu'auront été rejetées les impulsions principales telles que, à la même date, il existe au moins une impulsion auxiliaire coïncidente ;

$A$ est le vecteur isotopique ;

ne est le nombre de détecteurs auxiliaires, chaque détecteur auxiliaire d'indice $\theta$ étant associé à un secteur d'angles géométriques d'incidence propre noté $\Delta\theta$ ;

$W'_{1,\theta}$ est une matrice dont un terme général $w'_{1,j,i,\theta}$ est égal à la probabilité qu'un photon provenant de l'environnement, incident sur l'étage de détection selon le secteur d'angles géométriques d'incidence $\Delta\theta$, et présentant une énergie $E_i$ induise un dépôt d'énergie $E_j$ dans le détecteur principal sachant qu'auront été rejetées les impulsions principales telles que, à la même date, il existe au moins une impulsion auxiliaire coïncidente ; et

$Be$ est la partie du flux de bruit correspondant à des photons incidents sur l'étage de détection selon le secteur d'angles géométriques d'incidence $\Delta\theta$ ;

- une deuxième équation parmi l'au moins une deuxième équation s'écrit :

$$S_{2,\theta} = F_2 A + W_{2,\theta} B_\theta$$

où $\theta$ est un indice associé à un détecteur auxiliaire donné, le détecteur auxiliaire d'indice $\theta$ étant associé à un secteur d'angles géométriques d'incidence propre noté $\Delta\theta$ ;

$S_{2,\theta}$ est le deuxième spectre, égal au spectre du signal auxiliaire acquis correspondant au détecteur auxiliaire d'indice $\theta$ ;

$F_2$ est une matrice dont un terme général $f_{2,j,i}$ est égal à la probabilité qu'un photon incident d'énergie $E_i$ et issu de la source à caractériser induise un dépôt d'énergie $E_j$ dans le détecteur auxiliaire d'indice $\theta$ ;

$A$ est le vecteur isotopique ;

$W_{2,\theta}$ est une matrice dont un terme général $w_{2,j,i,\theta}$ est égal à la probabilité qu'un photon provenant de l'environnement, incident sur l'étage de détection selon le secteur d'angles géométriques d'incidence $\Delta\theta$, et présentant une énergie $E_i$ induise un dépôt d'énergie $E_j$ dans le détecteur auxiliaire d'indice $\theta$ ; et

$Be$ est la partie du flux de bruit correspondant à des photons incidents sur l'étage de détection selon le secteur d'angles géométriques d'incidence $\Delta\theta$.

En outre, l'invention a pour objet un procédé de spectrométrie comprenant les étapes suivantes :

- détection d'impulsions principales dans un signal de détection principal acquis, le signal de détection principal acquis étant le résultat de l'acquisition d'un signal de détection principal délivré par un détecteur principal, le détecteur principal étant configuré pour détecter au moins des photons présentant une énergie appartenant à une plage d'énergie principale dans le domaine X et/ou Y, et pour délivrer le signal de détection principal, le signal de détection principal comportant les impulsions principales, chaque impulsion principale étant représentative d'une interaction du détecteur principal avec un photon de la plage d'énergie principale ;
- détection d'impulsions auxiliaires dans au moins un signal de détection auxiliaire acquis, chaque signal de détection auxiliaire acquis étant le résultat d'un signal de détection auxiliaire correspondant délivré par un détecteur auxiliaire correspondant, chaque détecteur auxiliaire étant configuré pour détecter au moins des photons présentant une énergie appartenant à une plage d'énergie auxiliaire dans le domaine X et/ou Y, et pour délivrer le signal de détection auxiliaire correspondant, chaque signal de détection auxiliaire comportant des impulsions auxiliaires, chaque impulsion auxiliaire d'un signal de détection auxiliaire donné étant représentative d'une interaction du détecteur auxiliaire correspondant avec un photon de la plage d'énergie auxiliaire associée ;
- détermination, pour chaque impulsion principale, d'une énergie principale correspondante et, pour chaque impulsion auxiliaire, d'une énergie auxiliaire correspondante ;
- calcul d'un premier spectre en fonction du signal de détection principal acquis et, éventuellement, de chaque signal de détection auxiliaire acquis ;
- calcul d'au moins un deuxième spectre en fonction d'au moins un signal de détection auxiliaire acquis et, éventuellement, du signal de détection principal acquis ;
- calculer d'un vecteur isotopique et d'un flux de bruit comme étant les solutions d'un jeu d'équations comprenant :

  • une première équation dans laquelle le premier spectre s'exprime comme la somme du produit du vecteur isotopique par un premier paramètre d'un modèle numérique prédéterminé d'une part, et du produit du flux de bruit par un deuxième paramètre du modèle numérique d'autre part ; et

- au moins une deuxième équation dans laquelle chaque deuxième spectre s'exprime comme la somme du produit du vecteur isotopique par un troisième paramètre du modèle numérique d'une part, et du produit du flux de bruit par un quatrième paramètre du modèle numérique d'autre part ;

le vecteur isotopique étant un vecteur dont chaque composante d'indice i est représentative d'un nombre de photons émis par la source à caractériser, par unité de temps, dans un intervalle d'énergie $E_i$ associé à ladite composante d'indice i, lesdits photons ayant interagi exclusivement avec le détecteur principal et ayant déposé entièrement leur énergie dans le détecteur principal,

le flux de bruit étant un vecteur dont chaque composante d'indice i est représentative d'un nombre de photons, par unité de temps, provenant de l'environnement, dans un intervalle d'énergie $E_i$ associé à ladite composante d'indice i, et incidents sur l'étage de détection,

le modèle numérique associant une énergie donnée d'un photon incident à :

- une énergie principale déposée par le photon incident dans le détecteur principal, dont la valeur dépend de ce que le photon incident est issu d'une source à caractériser ou d'un environnement distinct de la source ; et
- une énergie auxiliaire déposée par le photon incident dans chaque détecteur auxiliaire, dont la valeur dépend de ce que le photon incident est issu de la source à caractériser ou de l'environnement.

En outre, l'invention a pour objet un produit programme d'ordinateur comprenant des instructions de code de programme qui, lorsqu'elles sont exécutées par un ordinateur, mettent en œuvre le procédé tel que défini ci-dessus.

## BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

- la figure 1 est une représentation schématique d'un mode de réalisation d'un système de spectrométrie selon l'invention ;
- la figure 2 est une représentation schématique d'une variante du système de spectrométrie de la figure 1.

## EXPOSÉ DÉTAILLÉ DE MODES DE RÉALISATION PARTICULIERS

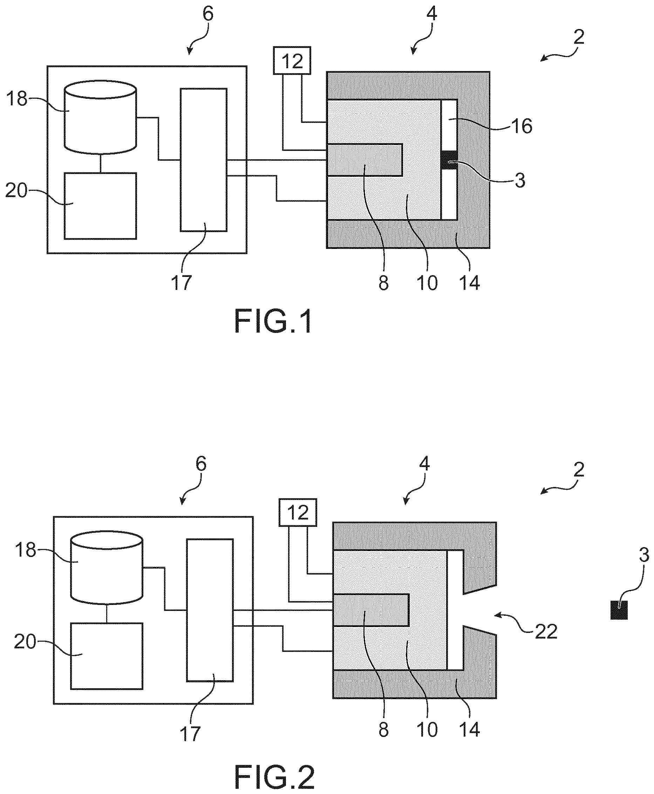

Un système de spectrométrie 2 selon l'invention est représenté sur la figure 1.

Le système de spectrométrie 2 est destiné à établir un spectre de rayonnement d'un échantillon 3, dans le domaine X et/ou Y. Plus précisément, le système de spectrométrie 2 est configuré pour établir un spectre de rayonnement de l'échantillon 3, dans lequel le bruit correspondant à un fond de diffusion Compton a été rejeté, c'est-à-dire filtré.

Le système de spectrométrie 2 est particulièrement destiné à l'établissement du spectre de rayonnement d'échantillons comprenant des isotopes radioactifs d'activité faible. Dans ce cas, chacun parmi un signal de détection principal et un signal de détection auxiliaire, qui seront décrits ultérieurement, comporte des impulsions successives au cours du temps, majoritairement distinctes les unes des autres (régime dit de « temps mort faible »).

Le système de spectrométrie 2 comporte un étage de détection 4 et un étage de traitement 6 connecté en sortie de l'étage de détection 4.

L'étage de détection 4 est configuré pour détecter des photons, et pour générer, en sortie, un signal électrique de détection principal et au moins un signal électrique de détection auxiliaire. En particulier, l'étage de détection 4 est configuré pour détecter des photons appartenant au domaine X et/ou Y.

Le signal de détection principal est représentatif de la détection de photons par un détecteur principal. Chaque signal de détection auxiliaire est représentatif de la détection de photons par un détecteur auxiliaire correspondant. Les détecteurs principal et auxiliaire(s) seront décrits ultérieurement.

L'étage de traitement 6 est configuré pour traiter le signal de détection principal et chaque signal de détection auxiliaire, afin de déterminer le spectre de rayonnement de l'échantillon 3.

Par « spectre de rayonnement », il est entendu, au sens de la présente invention, un vecteur dont chaque composante d'indice i (i entier naturel) est représentative d'un nombre de photons émis par l'échantillon 3, par unité de temps, dans un intervalle d'énergie $E_i$ associé à ladite composante d'indice i, lesdits photons ayant été générés par l'échantillon 3 et ayant interagi uniquement avec le détecteur principal et ayant déposé entièrement leur énergie dans celui-ci. Le spectre de rayonnement est également appelé « activité isotopique » de l'échantillon 3.

L'étage de détection 4 comprend le détecteur principal 8 et l'au moins un détecteur auxiliaire 10. L'étage de détection 4 comprend, en outre, un organe d'alimentation 12 pour l'alimentation du détecteur principal 8 et de chaque détecteur auxiliaire 10 en énergie électrique.

Le détecteur auxiliaire 10 est disposé autour du détecteur principal 8. En d'autres termes, le détecteur auxiliaire 10 recouvre au moins partiellement le détecteur principal 8. De préférence, le détecteur auxiliaire 10 recouvre le détecteur principal 8 de façon à intercepter un secteur angulaire valant au moins $2\pi$ sr (stéradian).

Dans le cas au l'étage de détection 4 comporte une pluralité de détecteurs auxiliaires 10, les détecteurs auxiliaires 10 sont disposés autour du détecteur principal 8, de façon à recouvrir au moins partiellement le détecteur principal 8. De préférence, les détecteurs auxiliaires 10 sont agencés de façon à ce qu'un secteur angulaire valant au moins $2\pi$ sr (stéradian) autour du détecteur principal 8 soit intercepté par les détecteurs auxiliaires 10.

Le détecteur principal 8 est configuré pour détecter des photons dans une plage d'énergie principale appartenant au domaine X et/ou Y, et pour générer un signal de détection principal représentatif d'une telle détection. Plus précisément, le signal de détection principal comporte des impulsions, encore appelées « impulsions principales », chacune représentative d'une interaction du détecteur principal 8 avec un photon de la plage d'énergie principale.

La plage d'énergie principale est continue ou discontinue.

Le détecteur principal 8 est, par exemple, une diode germanium hyper-pur (HPGe).

Chaque détecteur auxiliaire 10 est configuré pour détecter des photons dans une plage d'énergie auxiliaire appartenant au domaine X et/ou Y, et pour générer un signal de détection auxiliaire représentatif d'une telle détection. Plus précisément, chaque signal de détection auxiliaire comporte des impulsions, encore appelées « impulsions auxiliaire », chacune représentative d'une interaction du détecteur auxiliaire 10 correspondant avec un photon de la plage d'énergie auxiliaire associée.

Chaque plage d'énergie auxiliaire est continue ou discontinue.

L'intersection entre la plage d'énergie principale et la plage d'énergie auxiliaire est non nulle. De préférence, le système de spectrométrie 2 est configuré pour établir le spectre de rayonnement de l'échantillon 3 dans la plage d'énergie correspondant à l'intersection de la plage d'énergie principale et de la plage d'énergie auxiliaire.

Chaque détecteur auxiliaire 10 est, de préférence, un scintillateur, par exemple un scintillateur au germanate de bismuth BGO, un scintillateur à l'iodure de sodium dopé au thallium NaI(Tl), un scintillateur au bromure de lanthane dopé au cerium $LaBr_3(Ce)$, ou encore un scintillateur plastique, tel qu'un scintillateur commercialisé sous la référence « EJ-200 » par la société Eljen Technology™.

Avantageusement, l'étage de détection 4 comporte, en outre, un blindage 14, configuré pour absorber (voire réfléchir) des particules dont l'énergie appartient à la plage d'énergie principale et/ou à la plage d'énergie auxiliaire.

Le blindage 14 est disposé autour du (des) détecteur(s) auxiliaire(s) 10. En d'autres termes, le blindage 14 recouvre, de préférence intégralement, le(s) détecteur(s) auxiliaire(s) 10. Il en résulte que le blindage 14 recouvre le détecteur principal 8, de préférence de façon à intercepter un secteur angulaire valant au moins $4\pi$ sr autour du détecteur principal 8.

Le blindage 14 est, par exemple, réalisé en plomb ou en tungstène, ou en tout autre matériau présentant une haute densité et/ou un numéro atomique élevé.

Un tel blindage 14 est destiné à réduire la quantité de photons provenant de l'environnement (c'est-à-dire ne provenant pas de l'échantillon 3) qui parviennent au détecteur principal 8 et au(x) détecteur(s) auxiliaire(s) 10.

Comme illustré par la figure 1, un volume 16 est ménagé entre le(s) détecteur(s) auxiliaire(s) 10 et le blindage 14. Le volume 16 est destiné à accueillir l'échantillon 3. Par exemple, l'échantillon 3 est un échantillon solide. Selon un autre exemple, l'échantillon 3 est un fluide circulant dans une tuyauterie dont au moins une section est disposée dans le volume 14.

Est maintenant décrit l'étage de traitement 6 dans le cas où l'étage de détection 4 comporte un unique détecteur auxiliaire 10. L'architecture de l'étage de traitement 6 dans le cas où l'étage de détection 4 comporte plus d'un détecteur auxiliaire 10 s'en déduit directement.

L'étage de traitement 6 comporte un convertisseur analogique-numérique 17, une mémoire 18 et un organe de calcul 20. Le convertisseur analogique-numérique 17 et l'organe de calcul 20 sont tous deux connectés à la mémoire 18.

Le convertisseur analogique numérique 17 est configuré pour acquérir, c'est-à-dire numériser, chacun du signal de détection principal et du signal de détection auxiliaire en provenance de l'étage de détection 4, en un signal de détection principal acquis et un signal de détection auxiliaire acquis, respectivement.

La mémoire 18 est configurée pour stocker chacun du signal de détection principal acquis et du signal de détection auxiliaire acquis.

La mémoire 18 est, en outre, configurée pour stocker un modèle numérique du fonctionnement de l'étage de détection 4.

Un tel modèle numérique est, par exemple, obtenu par en mettant en œuvre une simulation numérique du transport de particules ionisantes par méthode de Monte-Carlo (par exemple, au moyen des codes MCNP, TRIPOLI, GEANT, etc.). De préférence, le modèle numérique ainsi obtenu est validé expérimentalement avec des sources-étalons.

Un tel modèle comporte six matrices, respectivement notée $F_1$, $F'_1$, $F_2$, $W_1$, $W'_1$ et $W_2$. Chacune des matrices $F_1$, $F'_1$, $F_2$, $W_1$, $W'_1$ et $W_2$ comporte $j_{max}$ lignes et $i_{max}$ colonnes.

Le terme général $f_{1,j,i}$ de la matrice $\mathbf{F_1}$ est égal à la probabilité qu'un photon incident d'énergie $E_i$ et issu de l'échantillon 3 induise un dépôt d'énergie $E_j$ dans le détecteur principal 8.

Le terme général $w_{1,j,i}$ de la matrice $\mathbf{W_1}$ est égal à la probabilité qu'un photon correspondant à un bruit de diffusion de type I.c, I.d, II.b, II.c et présentant une énergie $E_i$ induise un dépôt d'énergie $E_j$ dans le détecteur principal 8.

Le terme général $f_{2,j,i}$ de la matrice $\mathbf{F_2}$ est égal à la probabilité qu'un photon incident d'énergie $E_i$ et issu de l'échantillon 3 induise un dépôt d'énergie $E_j$ dans le détecteur auxiliaire 10.

Le terme général $w_{2,j,i}$ de la matrice $\mathbf{W_2}$ est égal à la probabilité qu'un photon correspondant à un bruit de diffusion de type I.c, I.d, II.b, II.c et présentant une énergie $E_i$ induise un dépôt d'énergie $E_j$ dans le détecteur auxiliaire 10.

Le terme général $f'_{1,j,i}$ de la matrice $\mathbf{F'_1}$ est égal à la probabilité qu'un photon incident d'énergie $E_i$ et issu de l'échantillon 3 induise un dépôt d'énergie $E_j$ dans le détecteur principal 8 sachant qu'auront été rejetés les événements où un dépôt d'énergie simultané non nul aura été détecté dans le détecteur auxiliaire 10.

Par « impulsions simultanées », il est entendu, au sens de la présente invention, une impulsion principale et une impulsion auxiliaire qui sont séparées temporellement par une durée inférieure à une durée maximale prédéterminée, par exemple inférieure à quelques microsecondes.

Le terme général $w'_{1,j,i}$ de la matrice $\mathbf{W'_1}$ est égal à la probabilité qu'un photon correspondant à un bruit de diffusion de type I.c, I.d, II.b, II.c (c'est-à-dire provenant de l'environnement) et présentant une énergie $E_i$ induise un dépôt d'énergie $E_j$ dans le détecteur principal 8 sachant qu'auront été rejetés les événements où un dépôt d'énergie simultané non nul aura été détecté dans le détecteur auxiliaire 10.

Il résulte de ce qui précède que l'indice $i_{max}$ est l'indice servant à repérer l'énergie maximale $E_{i_{max}}$ de l'échantillon 3, et $j_{max}$ l'indice servant à repérer l'énergie maximale $E_{j_{max}}$ déposée dans les détecteurs 8, 10. Par conséquent, l'inégalité suivante est vérifiée : $E_{j_{max}} \leq E_{i_{max}}$.

En outre, il ressort de ce qui précède que les matrices $\mathbf{F_1}$, $\mathbf{F'_1}$, $\mathbf{F_2}$ sont des matrices de transfert du signal photonique issu de l'échantillon 3. En outre, les matrices $\mathbf{W_1}$, $\mathbf{W'_1}$ et $\mathbf{W_2}$ sont des matrices de transfert du signal photonique issu de l'environnement autour de l'étage de détection 4, assimilé à du bruit. En d'autres termes, les matrices $\mathbf{W_1}$, $\mathbf{W'_1}$ et $\mathbf{W_2}$ correspondent chacune à un modèle du bruit, c'est-à-dire des photons ne provenant pas de l'échantillon 3. Les bruits de diffusion de type I.a, I.b et II.a ne sont pas considérés car ils dépendent directement de l'échantillon 3. Le bruit de diffusion de type II.b est, quant à lui, pris en compte dans les matrices $\mathbf{W_1}$, $\mathbf{W'_1}$ et $\mathbf{W_2}$ car, dans ce cas, le photon a perdu sa cohérence avec l'échantillon 3.

L'organe de calcul 20 est configuré pour traiter le signal de détection principal acquis et le signal de détection auxiliaire acquis stockés dans la mémoire 18.

De préférence, l'organe de calcul 20 est configuré pour réaliser un filtrage du signal de détection principal acquis et du signal de détection auxiliaire acquis. Un tel filtrage consiste, par exemple, à affecter, dans chaque signal de détection acquis, une valeur nulle aux échantillons dont l'amplitude est inférieure ou égale à un seuil prédéterminé. Ceci conduit à la génération d'un signal de détection principal filtré et un signal de détection auxiliaire filtré.

En variante, ou en complément, l'organe de calcul 20 est configuré pour réaliser un filtrage du signal de détection principal acquis et du signal de détection auxiliaire acquis en affectant une valeur nulle aux impulsions dont l'amplitude est inférieure ou égale à une amplitude minimale prédéterminée.

L'organe de calcul 20 est, en outre, configuré pour détecter des impulsions coïncidentes dans le signal de détection principal acquis et le signal de détection auxiliaire acquis (ou le cas échéant, dans le signal de détection principal filtré et le signal de détection auxiliaire filtré), c'est-à-dire des impulsions qui, dans le signal de détection principal acquis et le signal de détection auxiliaire acquis (ou, le cas échéant, dans le signal de détection principal filtré et le signal de détection auxiliaire filtré), surviennent à une même date.

L'organe de calcul 20 est également configuré pour construire un signal hybride, correspondant au signal de détection principal acquis (ou, le cas échéant, au signal de détection principal filtré) dont ont été supprimées les impulsions coïncidant avec des impulsions du signal de détection auxiliaire acquis (ou, le cas échéant, du signal de détection auxiliaire filtré).

L'organe de calcul 20 est également configuré pour déterminer, pour chaque impulsion du signal de détection principal, du signal hybride et du signal de détection auxiliaire, l'énergie qui a été déposée dans le détecteur 8, 10 correspondant par le photon ayant engendré ladite impulsion. Par exemple, pour une impulsion donnée, l'énergie déposée dans le détecteur 8, 10 par le photon correspondant est obtenue à partir de l'amplitude maximale de l'impulsion, ou encore à partir de l'aire de l'impulsion.

L'organe de calcul 20 est, en outre, configuré pour calculer chacun parmi :

- un spectre $\mathbf{S_1}$ du signal de détection principal acquis (ou, le cas échéant, du signal de détection principal filtré) ;
- un spectre $\mathbf{S'_1}$ du signal hybride ; et
- un spectre $\mathbf{S_2}$ du signal de détection auxiliaire acquis (ou, le cas échéant, du signal de détection auxiliaire filtré).

Chaque spectre $\mathbf{S_1}$, $\mathbf{S'_1}$ et $\mathbf{S_2}$ est un vecteur à $j_{max}$ lignes et une colonne.

Chaque spectre $S_1$, $S'_1$ et $S_2$ est la réponse de l'étage de détection 4 aux radiations issues de l'échantillon 3 et de l'environnement, de sorte que, par exemple, $S_1$ vérifie la relation (1) suivante :

$$S_1 = F_1A + W_1B \quad (1)$$

où **A,** appelé « vecteur isotopique », est un vecteur à $i_{max}$ lignes et une colonne, dont chaque composante d'indice i est représentative d'un nombre de photons émis par l'échantillon 3, par unité de temps, dans un intervalle d'énergie $E_i$ associé à ladite composante d'indice i, lesdits photons ayant interagi exclusivement avec le détecteur principal 8 et ayant déposé entièrement leur énergie dans celui-ci ; et

**B,** appelé « flux de l'ambiance radioactive », ou encore « flux de bruit », est un vecteur à $i_{max}$ lignes et une colonne, dont chaque composante d'indice i est représentative d'un nombre de photons, par unité de temps, provenant de l'environnement autour de l'étage de détection 4, dans un intervalle d'énergie $E_i$ associé à ladite composante d'indice i, et incidents sur l'étage de détection 4.

La relation (1) s'écrit également :

$$\begin{cases} S_{1,1} = f_{1,1,1}A_1 + ... + f_{1,i,1}A_i + ... + f_{1,i_{max},1}A_{i_{max}} + \\ \quad\quad w_{1,1,1}B_1 + ... + w_{1,i,1}B_i + ... + w_{1,i_{max},1}B_{i_{max}} \\ \quad\quad\quad\quad \vdots \\ S_{1,j} = f_{1,1,j}A_1 + ... + f_{1,i,j}A_i + ... + f_{1,i_{max},j}A_{i_{max}} + \\ \quad\quad w_{1,1,j}B_1 + ... + w_{1,i,j}B_i + ... + w_{1,i_{max},j}B_{i_{max}} \\ \quad\quad\quad\quad \vdots \\ S_{1,j_{max}} = f_{1,1,j_{max}}A_1 + ... + f_{1,i,j_{max}}A_i + ... + f_{1,i_{max},j_{max}}A_{i_{max}} + \\ \quad\quad w_{1,1,j_{max}}B_1 + ... + w_{1,i,j_{max}}B_i + ... + w_{1,i_{max},j_{max}}B_{i_{max}} \end{cases} \quad (2)$$

De la même manière, $S'_1$ et $S_2$ vérifient les relations (3) et (4) suivantes :

$$S'_1 = F'_1A + W'_1B \quad (3)$$

$$S_2 = F_2A + W_2B \quad (4)$$

L'organe de calcul 20 est également configuré pour calculer une estimée $\hat{B}$ du flux de bruit **B** (ou « estimée du flux de bruit $\hat{B}$ »). Plus précisément, le système d'équations (1), (3) et (4) étant surdéterminé, l'étage de traitement 6 est configuré pour calculer l'estimée du flux de bruit $\hat{B}$ selon :

$$\hat{B} = \left[W_2 - F_2F_1^{-1}W_1\right]^{-1}\left(S_2 - F_2F_1^{-1}S_1\right) \quad (5)$$

ou encore selon :

$$\hat{B} = \left[W_2 - F_2F_1'^{-1}W'_1\right]^{-1}\left(S_2 - F_2F_1'^{-1}S'_1\right) \quad (6)$$

ou encore selon :

$$\hat{B} = p\left[W_2 - F_2F_1^{-1}W_1\right]^{-1}\left(S_2 - F_2F_1^{-1}S_1\right) + (1-p)\left[W_2 - F_2F_1'^{-1}W'_1\right]^{-1}\left(S_2 - F_2F_1'^{-1}S'_1\right) \quad (7)$$

avec p un réel tel que $0 \leq p \leq 1$, prédéterminé ou non.

Le symbole « $^{-1}$ » représente l'opérateur « inverse », l'organe de calcul 20 étant configuré pour mettre en œuvre l'une quelconque des méthodes numériques ou algébriques d'inversion de matrice connues de l'homme du métier. En variante, pour réaliser une telle inversion, l'organe de calcul 20 est configuré pour mettre en œuvre toute autre méthode n'impliquant par une inversion de matrice *stricto sensu,* mais plutôt une estimation de la meilleure fonction de transfert entre un terme de droite et un terme de gauche sous une forme déterminée (par exemple $W_2\text{-}F_2F_1^{-1}W_1$ dans l'équation (5)). Ceci permet, notamment, de tenir compte, dans la recherche des estimées de la fonction de transfert, des incertitudes inhérentes à la nature stochastique des objets mathématiques que sont les matrices de transfert $F_1$, $F'1$, $F_2$ et $W_1$, $W'_1$, $W_2$. Une telle méthode est, par exemple, une méthode de type « *Maximum Likelihood Expectation-Maximization* » (pour méthode espérance-maximisation du maximum de vraisemblance) dédiées aux signaux nucléaires.

L'étage de traitement 6 est également configuré pour calculer une estimée Â de l'activité isotopique **A** (ou « estimée de l'activité isotopique Â »). Plus précisément, l'étage de traitement 6 est configuré pour calculer l'estimée de l'activité isotopique Â, en particulier si la relation (5) a été utilisée auparavant, selon :

$$\widehat{A} = F_1^{-1}(S_1 - W_1\widehat{B}) \quad (8)$$

ou encore, en particulier si la relation (6) a été utilisée auparavant, selon :

$$\widehat{A} = F'^{-1}_1(S'_1 - W'_1\widehat{B}) \quad (9)$$

ou encore selon :

$$\widehat{A} = r.F_1^{-1}(S_1 - W_1\widehat{B}) + (1-r)F'^{-1}_1(S'_1 - W'_1\widehat{B}) \quad (10)$$

avec r un réel tel que $0 \leq r \leq 1$, prédéterminé ou non.

Toutefois, le recours aux formules (6) et (9) est préféré, ces dernières fournissant *a priori* une meilleure estimée de l'activité isotopique Â grâce au recours à $S'i$, car, dans $S'i$, le bruit de diffusion de type I a été préalablement filtré.

L'estimée de l'activité isotopique Â constitue une estimée du spectre d'émission de l'échantillon 3.

Le fonctionnement du système de détection 2 va maintenant être décrit, dans le cas où le système de détection 2 comporte un détecteur principal 8 et un détecteur auxiliaire 10.

Au cours d'une phase d'initialisation, un modèle numérique du fonctionnement de l'étage de détection 4 est établi et stocké dans la mémoire 18 de l'étage de traitement 6. En particulier, les matrices de transfert $F_1$, $F'_1$, $F_2$, $W_1$, $W'_1$ et $W_2$ sont stockées dans la mémoire 18.

Puis, le système de détection 2, et en particulier l'étage de détection 4, est exposé à un échantillon 3.

Le détecteur principal 8 et le détecteur auxiliaire 10, qui sont alimentés en énergie électrique par l'organe d'alimentation 12, délivrent en sortie, un signal de détection principal et un signal de détection auxiliaire respectivement.

Puis, le convertisseur analogique-numérique 17 de l'étage de traitement 6 acquiert le signal de détection principal et le signal de détection auxiliaire reçus depuis l'étage de détection 4, en un signal de détection principal acquis et un signal de détection auxiliaire acquis, respectivement.

Le signal de détection principal acquis et le signal de détection auxiliaire acquis sont stockés dans la mémoire 18.

Puis, de préférence, l'organe de calcul 20 de l'étage de traitement 6 filtre le signal de détection principal acquis et le signal de détection auxiliaire acquis en un signal de détection principal filtré et un signal de détection auxiliaire filtré.

Puis, l'organe de calcul 20 détecte les impulsions coïncidentes dans le signal de détection principal acquis et le signal de détection auxiliaire acquis (ou, le cas échéant, dans le signal de détection principal filtré et le signal de détection auxiliaire filtré).

L'organe de calcul 20 construit, en outre, le signal hybride, correspondant au signal de détection principal acquis dont ont été supprimées les impulsions coïncidant avec des impulsions du signal de détection auxiliaire acquis (ou, le cas échéant, correspondant au signal de détection principal filtré dont ont été supprimées les impulsions coïncidant avec des impulsions du signal de détection auxiliaire filtré).

Puis, pour chaque impulsion du signal de détection principal acquis et du signal de détection auxiliaire acquis (ou, le cas échéant, du signal de détection principal filtré et du signal de détection auxiliaire filtré), et du signal hybride, l'organe de calcul 20 calcule l'énergie qui a été déposée dans le détecteur 8, 10 correspondant, par le photon ayant engendré ladite impulsion.

Puis, l'organe de calcul 20 calcule chacun parmi :

- le spectre $S_1$ du signal de détection principal acquis ;
- le spectre $S'_1$ du signal hybride ; et
- le spectre $S_2$ du signal de détection auxiliaire acquis.

Puis, l'organe de calcul 20 calcule l'estimée du flux de bruit $\hat{B}$, en mettant en œuvre la formule (5), (6) ou (7).

Puis, l'organe de calcul 20 calcule l'estimée de l'activité isotopique $\hat{A}$, en mettant en œuvre la formule (8), (9) ou (10). De préférence, pour le calcul de l'estimée de l'activité isotopique $\hat{A}$, la formule (8) est utilisée si l'estimée du flux de bruit $\hat{B}$ est préalablement calculée au moyen de la formule (5), et la formule (9) est utilisée si l'estimée du flux de bruit $\hat{B}$ est préalablement calculée au moyen de la formule (6).

Un deuxième mode de réalisation de l'invention diffère du système de spectrométrie 2 décrit précédemment en ce que l'étage de détection 4 comporte ne détecteurs auxiliaires (ne étant un entier naturel supérieur ou égal à 2). Dans ce cas, l'indice $\theta$, compris entre 1 et ne, permet d'établir une bijection entre un détecteur auxiliaire 10 et un secteur d'angles géométriques d'incidence correspondant, noté $\Delta\theta$. Avantageusement, la somme de l'ensemble des secteurs d'angles géométriques d'incidence vaut $2\pi$.

Dans ce cas, l'étage de détection 4 délivre ne signaux de détection auxiliaires à l'étage de traitement 6.

Dans ce cas, le modèle numérique du fonctionnement de l'étage de détection 4 comporte, outre les matrices de transfert $\mathbf{F_1}$, $\mathbf{F'_1}$, $\mathbf{F_2}$, ne matrices $\mathbf{W_{1,\theta}}$, ne matrices $\mathbf{W'_{1,\theta}}$ et $n_\theta$ matrices $\mathbf{W_{2,\theta}}$.

Chacune des matrices $\mathbf{W_{1,\theta}}$, $\mathbf{W'_{1,\theta}}$ ou $\mathbf{W_{2,\theta}}$ est assimilable à une matrice de transfert $\mathbf{W_1}$, $\mathbf{W'_1}$ ou $\mathbf{W_2}$ du signal photonique issu de l'environnement, pour le détecteur auxiliaire 10 d'indice $\theta$ exclusivement.

Dans ce cas, le convertisseur analogique-numérique 17 est configuré pour acquérir chaque signal de détection auxiliaire en un signal de détection auxiliaire acquis.

En outre, dans ce cas, l'organe de calcul 20 est configuré pour calculer, pour chaque signal de détection auxiliaire acquis, éventuellement filtré, issu d'un détecteur auxiliaire 10 d'indice $\theta$, le spectre un spectre $\mathbf{S_{2,\theta}}$ correspondant.

Chaque spectre $\mathbf{S_1}$, $\mathbf{S'_1}$ et $\mathbf{S_{2,\theta}}$ est la réponse de l'étage de détection 4 aux radiations issues de l'échantillon 3 et de l'environnement. En particulier, les relations (1') suivantes sont vérifiées :

$$\begin{cases} \mathbf{S_1} = \mathbf{F_1A} + \sum_{\theta=1}^{n_\theta} \mathbf{W_{1,\theta}B_\theta} \\ \mathbf{S'_1} = \mathbf{F'_1A} + \sum_{\theta=1}^{n_\theta} \mathbf{W'_{1,\theta}B_\theta} \\ \quad \mathbf{S_{2,1}} = \mathbf{F_2A} + \mathbf{W_{2,1}B_1} \\ \qquad\qquad \vdots \\ \quad \mathbf{S_{2,\theta}} = \mathbf{F_2A} + \mathbf{W_{2,\theta}B_\theta} \\ \qquad\qquad \vdots \\ \quad \mathbf{S_{2,n_\theta}} = \mathbf{F_2A} + \mathbf{W_{2,n_\theta}B_{n_\theta}} \end{cases} \qquad (1')$$

Be, étant un vecteur à $i_{max}$ lignes et une colonne, dont chaque composante d'indice i est représentative d'un nombre de photons, par unité de temps, provenant de l'environnement, dans un intervalle d'énergie $E_i$ associé à ladite composante d'indice i, et incidents sur l'étage de détection 4 selon le secteur d'angles géométriques d'incidence $\Delta\theta$.

A titre d'exemple, et par analogie avec ce qui précède, la décomposition du spectre $\mathbf{S_1}$ est donnée par les relations suivantes :

$$\begin{cases} S_{1,1} = f_{1,1,1}A_1 + \ldots + f_{1,i,1}A_i + \ldots + f_{1,i_{max},1}A_{i_{max}} + \\ \qquad \sum_{\theta=1}^{n_\theta} w_{1,1,1,\theta}B_{1,\theta}+\ldots+w_{1,i,1,\theta}B_{i,\theta}+\ldots w_{1,i_{max},1,\theta}B_{i_{max},\theta} \\ \qquad\qquad \vdots \\ S_{1,j} = f_{1,1,j}A_1 + \ldots + f_{1,i,j}A_i + \ldots + f_{1,i_{max},j}A_{i_{max}} + \\ \qquad \sum_{\theta=1}^{n_\theta} w_{1,1,j,\theta}B_{1,\theta}+\ldots+w_{1,i,j,\theta}B_{i,\theta}+\ldots w_{1,i_{max},j,\theta}B_{i_{max},\theta} \\ \qquad\qquad \vdots \\ S_{1,j_{max}} = f_{1,1,j_{max}}A_1 + \ldots + f_{1,i,j_{max}}A_i + \ldots + f_{1,i_{max},j_{max}}A_{i_{max}} + \\ \qquad \sum_{\theta=1}^{n_\theta} w_{1,1,j_{max},\theta}B_{1,\theta}+\ldots+w_{1,i,j_{max},\theta}B_{i,\theta}+\ldots w_{1,i_{max},j_{max},\theta}B_{i_{max},\theta} \end{cases} \qquad (2')$$

Dans ce cas, l'organe de calcul est configuré pour calculer l'estimée de l'activité isotopique A d'une façon similaire à ce qui a été exposé précédemment, en mettant notamment en œuvre les estimées du flux de bruit $\widehat{B_\theta}$ dans chaque secteur d'angles géométriques d'incidence $\Delta\theta$. En particulier, et comme cela ressort des relations (2'), l'ensemble des relations relatives aux spectres $S_{2,1}$ à $S_{2,n_\theta}$ sont mises en œuvre pour le calcul de l'estimée du flux de bruit $\hat{B}$ et de l'estimée de l'activité isotopique $\hat{A}$.

Selon une variante du premier ou du deuxième mode de réalisation, illustrée par la figure 2, le blindage 16 comporte une ouverture 22 formant collimateur. Dans ce cas, l'échantillon 3 est, de préférence, disposé d'un côté opposé du blindage 16 par rapport aux détecteur 8, 10, de préférence dans le champ de vue du collimateur.

Alternativement, les matrices $F_1^{-1}$, $F'_1^{-1}$, $F_2^{-1}$, $W_1^{-1}$, $W'_1^{-1}$ et $W_2^{-1}$ sont préalablement stockées dans la mémoire 18. Dans ce cas, l'organe de calcul 20 est configuré pour déterminer l'estimée de l'activité isotopique $\hat{A}$ et l'estimée du flux de bruit $\hat{B}$ par la mise en œuvre directe des relations (5), (6), (7) et (8) sans que le calcul de l'inverse de chacune des matrices $F_1$, $F'_1$, $F_2$, $W_1$, $W'_1$ et $W_2$ respectivement ne soit requis. Ceci s'applique également dans le cas où l'étage de détection 4 comporte ne détecteurs auxiliaires.

Selon un mode de réalisation de l'invention, l'organe de calcul est configuré pour supprimer, dans chaque signal de détection auxiliaire, chaque impulsion telle que, à la même date, il existe une impulsion coïncidente dans le signal de détection issu du détecteur principal. Dans ce cas, les matrices $F_2$ et $W_2$ sont modifiées en conséquence, d'une façon similaire à celle permettant l'obtention des matrices $F'_1$ et $W'_1$.

## Revendications

1. Système de spectrométrie (2) comprenant un étage de détection (4) comportant un détecteur principal (8) et au moins un détecteur auxiliaire (10),

   le détecteur principal (8) étant configuré pour détecter au moins des photons présentant une énergie appartenant à une plage d'énergie principale dans le domaine X et/ou Y, et pour délivrer un signal de détection principal comportant des impulsions principales, chaque impulsion principale étant représentative d'une interaction du détecteur principal (8) avec un photon de la plage d'énergie principale,

   chaque détecteur auxiliaire (10) étant configuré pour détecter au moins des photons présentant une énergie appartenant à une plage d'énergie auxiliaire dans le domaine X et/ou Y, et pour délivrer un signal de détection auxiliaire comportant des impulsions auxiliaires, chaque impulsion auxiliaire d'un signal de détection auxiliaire donné étant représentative d'une interaction du détecteur auxiliaire (10) correspondant avec un photon de la plage d'énergie auxiliaire associée,

   le système de spectrométrie (2) étant **caractérisé en ce qu**'il comporte, en outre, un étage de traitement (6) comprenant :

   - un organe d'acquisition (17) configuré pour acquérir le signal de détection principal en un signal de détection principal acquis, et chaque signal de détection auxiliaire en un signal de détection auxiliaire acquis correspondant ;
   - un organe de calcul (20) configuré pour :

     • détecter les impulsions principales dans le signal de détection principal acquis et les impulsions auxiliaires dans chaque signal de détection auxiliaire acquis ;
     • déterminer, pour chaque impulsion principale, une énergie principale correspondante et, pour chaque impulsion auxiliaire, une énergie auxiliaire correspondante ;
     • calculer un premier spectre en fonction du signal de détection principal acquis et, éventuellement, de chaque signal de détection auxiliaire acquis ;
     • calculer au moins un deuxième spectre en fonction d'au moins un signal de détection auxiliaire acquis et, éventuellement, du signal de détection principal acquis ;

   - une mémoire (18) configurée pour stocker un modèle numérique associant une énergie donnée d'un photon incident parvenant à l'étage de détection (4), à :

     • une énergie principale déposée par le photon incident dans le détecteur principal (8), dont la valeur dépend de ce que le photon incident est issu de la source à caractériser ou d'un environnement distinct de la source ; et
     • une énergie auxiliaire déposée par le photon incident dans chaque détecteur auxiliaire (10), dont la valeur dépend de ce que le photon incident est issu de la source à caractériser ou de l'environnement ;

l'organe de calcul (20) étant, en outre, configuré pour calculer un vecteur isotopique et/ou un flux de bruit comme étant chacun une solution d'un jeu d'équations comprenant :

• une première équation dans laquelle le premier spectre s'exprime comme la somme du produit du vecteur isotopique par un premier paramètre du modèle numérique d'une part, et du produit du flux de bruit par un deuxième paramètre du modèle numérique d'autre part ; et
• au moins une deuxième équation dans laquelle chaque deuxième spectre s'exprime comme la somme du produit du vecteur isotopique par un troisième paramètre du modèle numérique d'une part, et du produit du flux de bruit par un quatrième paramètre du modèle numérique d'autre part ;

le vecteur isotopique étant un vecteur dont chaque composante d'indice i est représentative d'un nombre de photons émis par la source à caractériser, par unité de temps, dans un intervalle d'énergie $E_i$ associé à ladite composante d'indice i, lesdits photons ayant interagi exclusivement avec le détecteur principal (8) et ayant déposé entièrement leur énergie dans le détecteur principal (8),
le flux de bruit étant un vecteur dont chaque composante d'indice i est représentative d'un nombre de photons, par unité de temps, provenant de l'environnement, dans un intervalle d'énergie $E_i$ associé à ladite composante d'indice i, et incidents sur l'étage de détection (4).

2. Système selon la revendication 1, dans lequel l'équation relative au premier signal s'écrit :

$$S_1 = F_1 A + \sum_{\theta=1}^{n_\theta} W_{1,\theta} B_\theta$$

où $S_1$ est le premier spectre, égal au spectre du signal de détection principal acquis ;
$F_1$ est une matrice dont un terme général $f_{1,j,i}$ est égal à la probabilité qu'un photon incident d'énergie $E_i$ et issu de la source à caractériser induise un dépôt d'énergie $E_j$ dans le détecteur principal ;
$A$ est le vecteur isotopique ;
ne est le nombre de détecteurs auxiliaires, chaque détecteur auxiliaire d'indice $\theta$ étant associé à un secteur d'angles géométriques d'incidence propre noté $\Delta\theta$ ;
$W_{i,e}$ est une matrice dont un terme général $w_{1,j,i,\theta}$ est égal à la probabilité qu'un photon provenant de l'environnement, incident sur l'étage de détection selon le secteur d'angles géométriques d'incidence $\Delta\theta$, et présentant une énergie $E_i$ induise un dépôt d'énergie $E_j$ dans le détecteur principal ; et
$B_e$ est la partie du flux de bruit correspondant à des photons incidents sur l'étage de détection selon le secteur d'angles géométriques d'incidence $\Delta\theta$.

3. Système selon la revendication 1 ou 2, dans lequel le calculateur est configuré pour calculer un signal hybride, le signal hybride étant obtenu à partir du signal de détection principal, duquel a été supprimée chaque impulsion principale telle que, à la même date, il existe une impulsion auxiliaire coïncidente dans au moins un signal de détection auxiliaire acquis,
un deuxième spectre parmi l'au moins un deuxième spectre étant le spectre du signal hybride.

4. Système selon la revendication 3, dans lequel une deuxième équation parmi l'au moins une deuxième équation s'écrit :

$$S'_1 = F'_1 A + \sum_{\theta=1}^{n_\theta} W'_{1,\theta} B_\theta$$

où $S'_1$ est un deuxième spectre parmi l'au moins un deuxième spectre, égal au spectre du signal hybride ;
$F'_1$ est une matrice dont un terme général $f'_{1,j,i}$ est égal à la probabilité qu'un photon incident d'énergie $E_i$ et issu de la source induise un dépôt d'énergie $E_j$ dans le détecteur principal (8) sachant qu'auront été rejetées les impulsions principales telles que, à la même date, il existe au moins une impulsion auxiliaire coïncidente ;
$A$ est le vecteur isotopique ;

ne est le nombre de détecteurs auxiliaires, chaque détecteur auxiliaire d'indice $\theta$ étant associé à un secteur d'angles géométriques d'incidence propre noté $\Delta\theta$ ;

$W'_{1,\theta}$ est une matrice dont un terme général $w'_{1,j,i,\theta}$ est égal à la probabilité qu'un photon provenant de l'environnement, incident sur l'étage de détection (4) selon le secteur d'angles géométriques d'incidence $\Delta\theta$, et présentant une énergie $E_i$ induise un dépôt d'énergie $E_j$ dans le détecteur principal (8) sachant qu'auront été rejetées les impulsions principales telles que, à la même date, il existe au moins une impulsion auxiliaire coïncidente ; et

**Be** est la partie du flux de bruit correspondant à des photons incidents sur l'étage de détection selon le secteur d'angles géométriques d'incidence $\Delta\theta$.

5. Système selon l'une quelconque des revendications 1 à 4, dans lequel une deuxième équation parmi l'au moins une deuxième équation s'écrit :

$$S_{2,\theta} = F_2 A + W_{2,\theta} B_\theta$$

où $\theta$ est un indice associé à un détecteur auxiliaire donné, le détecteur auxiliaire d'indice $\theta$ étant associé à un secteur d'angles géométriques d'incidence propre noté $\Delta\theta$ ;

$S_{2,\theta}$ est le deuxième spectre, égal au spectre du signal auxiliaire acquis correspondant au détecteur auxiliaire d'indice $\theta$ ;

$F_2$ est une matrice dont un terme général $f_{2,j,i}$ est égal à la probabilité qu'un photon incident d'énergie $E_i$ et issu de la source à caractériser induise un dépôt d'énergie $E_j$ dans le détecteur auxiliaire d'indice $\theta$ ;

**A** est le vecteur isotopique ;

$W_{2,\theta}$ est une matrice dont un terme général $w_{2,j,i,\theta}$ est égal à la probabilité qu'un photon provenant de l'environnement, incident sur l'étage de détection selon le secteur d'angles géométriques d'incidence $\Delta\theta$, et présentant une énergie $E_i$ induise un dépôt d'énergie $E_j$ dans le détecteur auxiliaire d'indice $\theta$ ; et

**Be** est la partie du flux de bruit correspondant à des photons incidents sur l'étage de détection selon le secteur d'angles géométriques d'incidence $\Delta\theta$.

6. Procédé de spectrométrie comprenant les étapes suivantes :

- détection d'impulsions principales dans un signal de détection principal acquis, le signal de détection principal acquis étant le résultat de l'acquisition d'un signal de détection principal délivré par un détecteur principal (8), le détecteur principal (8) étant configuré pour détecter au moins des photons présentant une énergie appartenant à une plage d'énergie principale dans le domaine X et/ou Y, et pour délivrer le signal de détection principal, le signal de détection principal comportant les impulsions principales, chaque impulsion principale étant représentative d'une interaction du détecteur principal (8) avec un photon de la plage d'énergie principale ;

- détection d'impulsions auxiliaires dans au moins un signal de détection auxiliaire acquis, chaque signal de détection auxiliaire acquis étant le résultat d'un signal de détection auxiliaire correspondant délivré par un détecteur auxiliaire (10) correspondant, chaque détecteur auxiliaire (10) étant configuré pour détecter au moins des photons présentant une énergie appartenant à une plage d'énergie auxiliaire dans le domaine X et/ou Y, et pour délivrer le signal de détection auxiliaire correspondant, chaque signal de détection auxiliaire comportant des impulsions auxiliaires, chaque impulsion auxiliaire d'un signal de détection auxiliaire donné étant représentative d'une interaction du détecteur auxiliaire (10) correspondant avec un photon de la plage d'énergie auxiliaire associée ;

- détermination, pour chaque impulsion principale, d'une énergie principale correspondante et, pour chaque impulsion auxiliaire, d'une énergie auxiliaire correspondante ;

- calcul d'un premier spectre en fonction du signal de détection principal acquis et, éventuellement, de chaque signal de détection auxiliaire acquis ;

- calcul d'au moins un deuxième spectre en fonction d'au moins un signal de détection auxiliaire acquis et, éventuellement, du signal de détection principal acquis ;

- calculer d'un vecteur isotopique et d'un flux de bruit comme étant les solutions d'un jeu d'équations comprenant :

• une première équation dans laquelle le premier spectre s'exprime comme la somme du produit du vecteur isotopique par un premier paramètre d'un modèle numérique prédéterminé d'une part, et du produit du flux de bruit par un deuxième paramètre du modèle numérique d'autre part ; et

• au moins une deuxième équation dans laquelle chaque deuxième spectre s'exprime comme la somme du produit du vecteur isotopique par un troisième paramètre du modèle numérique d'une part, et du produit du flux de bruit par un quatrième paramètre du modèle numérique d'autre part ;

le vecteur isotopique étant un vecteur dont chaque composante d'indice i est représentative d'un nombre de photons émis par la source à caractériser, par unité de temps, dans un intervalle d'énergie $E_i$ associé à ladite composante d'indice i, lesdits photons ayant interagi exclusivement avec le détecteur principal (8) et ayant déposé entièrement leur énergie dans le détecteur principal (8),

le flux de bruit étant un vecteur dont chaque composante d'indice i est représentative d'un nombre de photons, par unité de temps, provenant de l'environnement, dans un intervalle d'énergie $E_i$ associé à ladite composante d'indice i, et incidents sur l'étage de détection (4),

le modèle numérique associant une énergie donnée d'un photon incident à :

- une énergie principale déposée par le photon incident dans le détecteur principal (8), dont la valeur dépend de ce que le photon incident est issu d'une source (3) à caractériser ou d'un environnement distinct de la source (3) ; et
- une énergie auxiliaire déposée par le photon incident dans chaque détecteur auxiliaire (10), dont la valeur dépend de ce que le photon incident est issu de la source (3) à caractériser ou de l'environnement.

7. Produit programme d'ordinateur comprenant des instructions de code de programme qui, lorsqu'elles sont exécutées par un système de spectrométrie selon l'une des revendications 1 à 5, mettent en œuvre le procédé selon la revendication 6.

## Patentansprüche

1. Spektrometriesystem (2), das eine Detektionsstufe (4) mit einem Hauptdetektor (8) und zumindest einem Hilfsdetektor (10) aufweist,

wobei der Hauptdetektor (8) dazu ausgelegt ist, zumindest Photonen mit einer Energie zu detektieren, die zu einem Hauptenergiebereich in der X- und/oder Y-Domäne gehört, und ein Hauptdetektionssignal mit Hauptimpulsen auszugeben, wobei jeder Hauptimpuls repräsentativ ist für eine Wechselwirkung des Hauptdetektors (8) mit einem Photon des Hauptenergiebereichs,

wobei jeder Hilfsdetektor (10) dazu ausgelegt ist, zumindest Photonen mit einer Energie zu detektieren, die zu einem Hilfsenergiebereich in der X- und/oder Y-Domäne gehört, und ein Hilfsdetektionssignal mit Hilfsimpulsen auszugeben, wobei jeder Hilfsimpuls eines gegebenen Hilfsdetektionssignals repräsentativ ist für eine Wechselwirkung des entsprechenden Hilfsdetektors (10) mit einem Photon des zugehörigen Hilfsenergiebereichs,

wobei das Spektrometriesystem (2) **dadurch gekennzeichnet ist, dass** es ferner eine Verarbeitungsstufe (6) enthält, die aufweist:

- eine Erfassungseinrichtung (17), die dazu ausgelegt ist, das Hauptdetektionssignal als ein erfasstes Hauptdetektionssignal und jedes Hilfsdetektionssignal als ein entsprechend erfasstes Hilfsdetektionssignal zu erfassen;
- eine Recheneinrichtung (20), die ausgelegt ist zum:

  • Detektieren der Hauptimpulse im erfassten Hauptdetektionssignal und der Hilfsimpulse in jedem erfassten Hilfsdetektionssignal;
  • Bestimmen einer entsprechenden Hauptenergie für jeden Hauptimpuls und einer entsprechenden Hilfsenergie für jeden Hilfsimpuls;
  • Berechnen eines ersten Spektrums in Abhängigkeit von dem erfassten Hauptdetektionssignal und gegebenenfalls von jedem erfassten Hilfsdetektionssignal;
  • Berechnen zumindest eines zweiten Spektrums in Abhängigkeit von zumindest einem erfassten Hilfsdetektionssignal und gegebenenfalls von dem erfassten Hauptdetektionssignal;

- einen Speicher (18), der dazu ausgelegt ist, ein numerisches Modell abzuspeichern, das eine gegebene Energie eines einfallenden Photons, das auf die Detektionsstufe (4) auftrifft, zuordnet zu:

  • einer durch das einfallende Photon in den Hauptdetektor (8) eingetragenen Hauptenergie, deren Wert davon abhängt, ob das einfallende Photon von der zu charakterisierenden Quelle oder von einer von der Quelle verschiedenen Umgebung stammt; und
  • einer durch das einfallende Photon in jeden Hilfsdetektor (10) eingetragenen Hilfsenergie, deren Wert davon abhängt, ob das einfallende Photon von der zu charakterisierenden Quelle oder von der Umgebung stammt;

wobei die Recheneinrichtung (20) ferner dazu ausgelegt ist, einen Isotopenvektor und/oder einen Rauschfluss jeweils als Lösung eines Satzes von Gleichungen zu berechnen, die umfassen:

• eine erste Gleichung, in der das erste Spektrum als die Summe des Produkts des Isotopenvektors mit einem ersten Parameter des numerischen Modells einerseits und des Produkts des Rauschflusses mit einem zweiten Parameter des numerischen Modells andererseits ausgedrückt wird; und
• zumindest eine zweite Gleichung, in der jedes zweite Spektrum als die Summe des Produkts des Isotopenvektors mit einem dritten Parameter des numerischen Modells einerseits und des Produkts des Rauschflusses mit einem vierten Parameter des numerischen Modells andererseits ausgedrückt wird;

wobei der Isotopenvektor ein Vektor ist, von dem jede Komponente mit Index i repräsentativ ist für eine Anzahl von von der zu charakterisierenden Quelle emittierten Photonen pro Zeiteinheit in einem der Komponente mit Index i zugeordneten Energieintervall $E_i$, wobei die Photonen ausschließlich mit dem Hauptdetektor (8) in Wechselwirkung getreten sind und ihre Energie vollständig in den Hauptdetektor (8) eingebracht haben, wobei der Rauschfluss ein Vektor ist, von dem jede Komponente mit Index i repräsentativ ist für eine Anzahl von Photonen pro Zeiteinheit, die aus der Umgebung stammen, in einem der Komponente mit Index i zugeordneten Energieintervall $E_i$, und die auf die Detektionsstufe (4) auftreffen.

2. System nach Anspruch 1, wobei die Gleichung für das erste Signal lautet:

$$S_1 = F_1 A + \sum_{\theta=1}^{n_\theta} W_{1,\theta} B_\theta$$

worin

$S_1$ das erste Spektrum ist, das gleich dem Spektrum des erfassten Hauptdetektionssignals ist;
$F_1$ eine Matrix ist, deren allgemeiner Term $f_{1,j,i}$ gleich der Wahrscheinlichkeit ist, dass ein einfallendes Photon der Energie $E_i$ aus der zu charakterisierenden Quelle einen Eintrag der Energie $E_j$ in den Hauptdetektor bewirkt;
$A$ der Isotopenvektor ist;
$n_\theta$ die Anzahl der Hilfsdetektoren ist, wobei jeder Hilfsdetektor mit dem Index $\theta$ einem eigenen Sektor von geometrischen Einfallswinkeln, mit $\Delta\theta$ bezeichnet, zugeordnet ist;
$W_{1,\theta}$ eine Matrix ist, deren allgemeiner Term $w_{1,j,i,\theta}$ gleich der Wahrscheinlichkeit ist, dass ein Photon aus der Umgebung, das gemäß dem Sektor von geometrischen Einfallswinkeln $\Delta\theta$ auf die Detektionsstufe auftrifft und eine Energie $E_i$ aufweist, einen Eintrag der Energie $E_j$ in den Hauptdetektor bewirkt; und
$B_\theta$ der Teil des Rauschflusses ist, der den Photonen entspricht, die auf die Detektionsstufe gemäß dem Sektor von geometrischen Einfallswinkeln $\Delta\theta$ auftreffen.

3. System nach Anspruch 1 oder 2,
wobei die Recheneinrichtung dazu ausgelegt ist, ein Hybridsignal zu berechnen, wobei das Hybridsignal aus dem Hauptdetektionssignal gewonnen wird, aus dem jeder Hauptimpuls so unterdrückt wurde, dass gleichzeitig ein übereinstimmender Hilfsimpuls in zumindest einem erfassten Hilfsdetektionssignal vorhanden ist,
wobei ein zweites Spektrum von dem zumindest einen zweiten Spektrum das Spektrum des Hybridsignals ist.

4. System nach Anspruch 3, wobei eine zweite Gleichung von der zumindest einen zweiten Gleichung lautet:

$$S'_1 = F'_1 A + \sum_{\theta=1}^{n_\theta} W'_{1,\theta} B_\theta$$

worin

$S'_1$ ein zweites Spektrum von dem zumindest einen zweiten Spektrum ist, das gleich dem Spektrum des Hyb-

ridsignals ist;

$F'_1$ eine Matrix ist, deren allgemeiner Term $f'_{1,j,i}$ gleich der Wahrscheinlichkeit ist, dass ein einfallendes Photon der Energie $E_i$ aus der Quelle einen Eintrag der Energie $E_j$ in den Hauptdetektor (8) bewirkt, wobei die Hauptimpulse derart ausgeschlossen worden sind, dass gleichzeitig zumindest ein übereinstimmender Hilfsimpuls vorhanden ist;

$A$ der Isotopenvektor ist;

$n_\theta$ die Anzahl der Hilfsdetektoren ist, wobei jeder Hilfsdetektor mit dem Index $\theta$ einem eigenen Sektor von geometrischen Einfallswinkeln, mit $\Delta\theta$ bezeichnet, zugeordnet ist;

$W'_{1,\theta}$ eine Matrix ist, deren allgemeiner Term $w'_{1,j,i,\theta}$ gleich der Wahrscheinlichkeit ist, dass ein Photon aus der Umgebung, das gemäß dem Sektor von geometrischen Einfallswinkeln $\Delta\theta$ auf die Detektionsstufe (4) auftrifft und eine Energie $E_i$ aufweist, einen Eintrag der Energie $E_j$ in den Hauptdetektor (8) bewirkt, wobei die Hauptimpulse derart ausgeschlossen worden sind, dass gleichzeitig zumindest ein übereinstimmender Hilfsimpuls vorhanden ist; und

$B_\theta$ der Teil des Rauschflusses ist, der den Photonen entspricht, die auf die Detektionsstufe gemäß dem Sektor von geometrischen Einfallswinkeln $\Delta\theta$ auftreffen.

5. System nach einem der Ansprüche 1 bis 4, wobei eine zweite Gleichung von der zumindest einen zweiten Gleichung lautet:

$$S_{2,\theta} = F_2 A + W_{2,\theta} B_\theta$$

worin

$\theta$ ein Index ist, der einem gegebenen Hilfsdetektor zugeordnet ist, wobei der Hilfsdetektor mit Index $\theta$ einem eigenen Sektor von geometrischen Einfallswinkeln, mit $\Delta\theta$ bezeichnet, zugeordnet ist;

$S_{2,\theta}$ das zweite Spektrum ist, das gleich dem Spektrum des erfassten Hilfssignals ist, das dem Hilfsdetektor mit Index $\theta$ entspricht;

$F_2$ eine Matrix ist, deren allgemeiner Term $f_{2,j,i}$ gleich der Wahrscheinlichkeit ist, dass ein einfallendes Photon der Energie $E_i$ aus der zu charakterisierenden Quelle einen Eintrag der Energie $E_j$ in den Hilfsdetektor mit Index $\theta$ bewirkt;

$A$ der Isotopenvektor ist;

$W_{2,\theta}$ eine Matrix ist, deren allgemeiner Term $w_{2,j,i,\theta}$ gleich der Wahrscheinlichkeit ist, dass ein Photon aus der Umgebung, das gemäß dem Sektor von geometrischen Einfallswinkeln $\Delta\theta$ auf die Detektionsstufe auftrifft und eine Energie $E_i$ aufweist, einen Eintrag der Energie $E_j$ in den Hilfsdetektor mit Index $\theta$ bewirkt; und

$B_\theta$ der Teil des Rauschflusses ist, der den Photonen entspricht, die auf die Detektionsstufe gemäß dem Sektor von geometrischen Einfallswinkeln $\Delta\theta$ auftreffen.

6. Spektrometrieverfahren, umfassend die nachstehenden Schritte:

- Detektion von Hauptimpulsen in einem erfassten Hauptdetektionssignal, wobei das erfasste Hauptdetektionssignal das Ergebnis der Erfassung eines Hauptdetektionssignals ist, das von einem Hauptdetektor (8) ausgegeben wird, wobei der Hauptdetektor (8) dazu ausgelegt ist, zumindest Photonen mit einer Energie zu detektieren, die zu einem Hauptenergiebereich in der X- und/oder Y-Domäne gehört, und das Hauptdetektionssignal auszugeben, wobei das Hauptdetektionssignal die Hauptimpulse umfasst, wobei jeder Hauptimpuls repräsentativ ist für eine Wechselwirkung des Hauptdetektors (8) mit einem Photon des Hauptenergiebereichs;
- Detektion von Hilfsimpulsen in zumindest einem erfassten Hilfsdetektionssignal, wobei jedes erfasste Hilfsdetektionssignal das Ergebnis eines entsprechenden Hilfsdetektionssignals ist, das von einem entsprechenden Hilfsdetektor (10) ausgegeben wird, wobei jeder Hilfsdetektor (10) dazu ausgelegt ist, zumindest Photonen mit einer Energie zu detektieren, die zu einem Hilfsenergiebereich in der X- und/oder Y-Domäne gehört, und das entsprechende Hilfsdetektionssignal auszugeben, wobei jedes Hilfsdetektionssignal Hilfsimpulse umfasst, wobei jeder Hilfsimpuls eines gegebenen Hilfsdetektionssignals repräsentativ ist für eine Wechselwirkung des entsprechenden Hilfsdetektors (10) mit einem Photon des zugehörigen Hilfsenergiebereichs;
- Bestimmen einer entsprechenden Hauptenergie für jeden Hauptimpuls und einer entsprechenden Hilfsenergie für jeden Hilfsimpuls;
- Berechnen eines ersten Spektrums in Abhängigkeit von dem erfassten Hauptdetektionssignal und gegebenenfalls von jedem erfassten Hilfsdetektionssignal;
- Berechnen zumindest eines zweiten Spektrums in Abhängigkeit von zumindest einem erfassten Hilfsdetektionssignal und gegebenenfalls von dem erfassten Hauptdetektionssignal;
- Berechnen eines Isotopenvektors und eines Rauschflusses als Lösungen eines Satzes von Gleichungen, die umfassen:

• eine erste Gleichung, in der das erste Spektrum als die Summe des Produkts des Isotopenvektors mit einem ersten Parameter eines vorbestimmten numerischen Modells einerseits und des Produkts des Rauschflusses mit einem zweiten Parameter des numerischen Modells andererseits ausgedrückt wird; und
• zumindest eine zweite Gleichung, in der jedes zweite Spektrum als die Summe des Produkts des Isotopenvektors mit einem dritten Parameter des numerischen Modells einerseits und des Produkts des Rauschflusses mit einem vierten Parameter des numerischen Modells andererseits ausgedrückt wird;

wobei der Isotopenvektor ein Vektor ist, von dem jede Komponente mit Index i repräsentativ ist für eine Anzahl von von der zu charakterisierenden Quelle emittierten Photonen pro Zeiteinheit in einem der Komponente mit Index i zugeordneten Energieintervall $E_i$, wobei die Photonen ausschließlich mit dem Hauptdetektor (8) in Wechselwirkung getreten sind und ihre Energie vollständig in den Hauptdetektor (8) eingebracht haben,
wobei der Rauschfluss ein Vektor ist, von dem jede Komponente mit Index i repräsentativ ist für eine Anzahl von Photonen pro Zeiteinheit, die aus der Umgebung stammen, in einem der Komponente mit Index i zugeordneten Energieintervall $E_i$, und die auf die Detektionsstufe (4) auftreffen,
wobei das numerische Modell eine gegebene Energie eines einfallenden Photons zuordnet zu:

• einer durch das einfallende Photon in den Hauptdetektor (8) eingebrachten Hauptenergie, deren Wert davon abhängt, ob das einfallende Photon von der zu charakterisierenden Quelle (3) oder von einer von der Quelle (3) verschiedenen Umgebung stammt; und
• einer durch das einfallende Photon in jeden Hilfsdetektor (10) eingebrachten Hilfsenergie, deren Wert davon abhängt, ob das einfallende Photon von der zu charakterisierenden Quelle (3) oder von der Umgebung stammt.

7. Computerprogrammprodukt mit Programmcodeanweisungen, die bei Ausführung durch ein Spektrometriesystem nach einem der Ansprüche 1 bis 5 das Verfahren nach Anspruch 6 durchführen.

**Claims**

1. Spectrometry system (2) comprising a detection stage (4) including a main detector (8) and at least one auxiliary detector (10),
the main detector (8) being configured to detect at least photons having an energy belonging to a main energy range in the X and/or Y domain, and to deliver a main detection signal including main pulses, each main pulse being representative of an interaction of the main detector (8) with a photon in the main energy range,
each auxiliary detector (10) being configured to detect at least photons having an energy belonging to an auxiliary energy range in the X and/or Y domain, and to deliver an auxiliary detection signal including auxiliary pulses, each auxiliary pulse of a given auxiliary detection signal being representative of an interaction of the corresponding auxiliary detector (10) with a photon in the associated auxiliary energy range,
the spectrometry system (2) being **characterised in that** it further includes a processing stage (6) comprising:

- an acquisition member (17) configured to acquire the main detection signal as an acquired main detection signal, and each auxiliary detection signal as a corresponding acquired auxiliary detection signal;
- a computing member (20) configured to:

• detect the main pulses in the acquired main detection signal and the auxiliary pulses in each acquired auxiliary detection signal;
• determine, for each main pulse, a corresponding main energy and, for each auxiliary pulse, a corresponding auxiliary energy;
• calculate a first spectrum according to the acquired main detection signal and, optionally, according to each acquired auxiliary detection signal;
• calculate at least one second spectrum according to at least one acquired auxiliary detection signal and, optionally, according to the acquired main detection signal;

- a memory (18) configured to store a numerical model associating a given energy of an incident photon reaching the detection stage (4), with:

> • a main energy deposited by the incident photon in the main detector (8), the value of which is dependent on whether the incident photon comes from the source to be characterised or from an environment distinct from the source; and
> • an auxiliary energy deposited by the incident photon in each auxiliary detector (10), the value of which is dependent on whether the incident photon comes from the source to be characterised or from the environment;

the computing member (20) being further configured to compute an isotopic vector and/or a noise flux as each being a solution of a set of equations comprising:

> • a first equation wherein the first spectrum is expressed as the sum of the product of the isotopic vector and a first parameter of the numerical model on the one hand, and of the product of the noise flux and a second parameter of the numerical model on the other hand; and
> • at least one second equation wherein each second spectrum is expressed as the sum of the product of the isotopic vector and a third parameter of the numerical model on the one hand, and of the product of the noise flux and a fourth parameter of the numerical model on the other hand;

the isotopic vector being a vector each component of index i of which represents a number of photons emitted by the source to be characterised, per unit of time, in an energy interval $E_i$ associated with said component of index i, said photons having interacted exclusively with the main detector (8) and having entirely deposited their energy in the main detector (8),

the noise flux being a vector each component of index i of which represents a number of photons, per unit of time, coming from the environment, in an energy interval $E_i$ associated with said component of index i, and incident on the detection stage (4).

2. System according to claim 1, wherein the equation relating to the first signal is written:

$$S_1 = F_1 A + \sum_{\theta=1}^{n_\theta} W_{1,\theta} B_\theta$$

where $S_1$ is the first spectrum, equal to the spectrum of the acquired main detection signal;

$F_1$ is a matrix a general term $f_{1,j,i}$ of which is equal to the probability of an incident photon of energy $E_i$ and coming from the source to be characterised inducing a deposition of energy $E_j$ in the main detector;

A is the isotopic vector;

$n_\theta$ is the number of auxiliary detectors, each auxiliary detector of index $\theta$ being associated with a sector of geometric angles of proper incidence denoted $\Delta\theta$;

$W_{1,\theta}$ is a matrix a general term $w_{1,j,i,\theta}$ of which is equal to the probability of a photon coming from the environment, incident on the detection stage according to the sector of geometric angles of incidence $\Delta\theta$, and having an energy $E_i$, inducing a deposition of energy $E_j$ in the main detector; and

$B\theta$ is the part of the noise flux corresponding to photons incident on the detection stage according to the sector of geometric angles of incidence $\Delta\theta$.

3. System according to claim 1 or 2, wherein the computer is configured to compute a hybrid signal, the hybrid signal being obtained from the main detection signal, from which each main pulse has been eliminated, such that, at the same time, there is a coincident auxiliary pulse in at least one acquired auxiliary detection signal,

a second spectrum from the at least one second spectrum being the spectrum of the hybrid signal.

4. System according to claim 3, wherein a second equation from the at least one second equation is written:

$$S'_1 = F'_1 A + \sum_{\theta=1}^{n_\theta} W'_{1,\theta} B_\theta$$

where $S'_1$ is a second spectrum from the at least one second spectrum, equal to the spectrum of the hybrid signal; $F'_1$ is a matrix a general term $f'_{1,j,i}$ of which is equal to the probability of an incident photon of energy $E_i$ and coming from the source causing a deposition of energy $E_j$ in the main detector (8), on the understanding that the main pulses will have been rejected such that, at the same time, there is at least one coincident auxiliary pulse; A is the isotopic vector;

$n_\theta$ is the number of auxiliary detectors, each auxiliary detector of index $\theta$ being associated with a sector of geometric angles of proper incidence denoted $\Delta\theta$;

$W'_{1,\theta}$ is a matrix a general term $w'_{1,j,i,\theta}$ of which is equal to the probability of a photon coming from the environment, incident on the detection stage (4) according to the sector of geometric angles of incidence $\Delta\theta$, and having an energy $E_i$, causing a deposition of energy $E_j$ in the main detector (8), on the understanding that the main pulses will have been rejected such that, at the same time, there is at least one coincident auxiliary pulse; and

Be is the part of the noise flux corresponding to photons incident on the detection stage according to the sector of geometric angles of incidence $\Delta\theta$.

5. System according to any one of claims 1 to 4, wherein a second equation from the at least one second equation is written:

$$S_{2,\theta} = F_2 A + W_{2,\theta} B_\theta$$

where $\theta$ is an index associated with a given auxiliary detector, the auxiliary detector of index $\theta$ being associated with a sector of geometric angles of proper incidence denoted $\Delta\theta$;

$S_{2,\theta}$ is the second spectrum, equal to the spectrum of the acquired auxiliary signal corresponding to the auxiliary detector of index $\theta$;

$F_2$ is a matrix a general term $f_{2,j,i}$ of which is equal to the probability of an incident photon of energy $E_i$ and coming from the source to be characterised causing a deposition of energy $E_j$ in the auxiliary detector of index $\theta$; A is the isotopic vector;

$W_{2,\theta}$ is a matrix a general term $w_{2,j,i,\theta}$ of which is equal to the probability of a photon coming from the environment, incident on the detection stage according to the sector of geometric angles of incidence $\Delta\theta$, and having an energy $E_i$, causing a deposition of energy $E_j$ in the auxiliary detector of index $\theta$; and

Be is the part of the noise flux corresponding to photons incident on the detection stage according to the sector of geometric angles of incidence $\Delta\theta$.

6. Spectrometry method comprising the following steps:

- detecting main pulses in an acquired main detection signal, the acquired main detection signal being the result of the acquisition of a main detection signal delivered by a main detector (8), the main detector (8) being configured to detect at least photons having an energy belonging to a main energy range in the X and/or Y domain, and to deliver the main detection signal, the main detection signal including the main pulses, each main pulse being representative of an interaction of the main detector (8) with a photon in the main energy range;

- detecting auxiliary pulses in at least one acquired auxiliary detection signal, each acquired auxiliary detection signal being the result of a corresponding auxiliary detection signal delivered by a corresponding auxiliary detector (10), each auxiliary detector (10) being configured to detect at least photons having an energy belonging to an auxiliary energy range in the X and/or Y domain, and to deliver the corresponding auxiliary detection signal, each auxiliary detection signal including auxiliary pulses, each auxiliary pulse of a given auxiliary detection signal being representative of an interaction of the corresponding auxiliary detector (10) with a photon in the associated auxiliary energy range;

- determining, for each main pulse, a corresponding main energy and, for each auxiliary pulse, a corresponding auxiliary energy;

- calculating a first spectrum according to the acquired main detection signal and, optionally, each acquired auxiliary detection signal;

- calculating at least one second spectrum according to at least one acquired auxiliary detection signal and, optionally, the acquired main detection signal;

- calculating an isotopic vector and a noise flux as being the solutions of a set of equations comprising:

  • a first equation wherein the first spectrum is expressed as the sum of the product of the isotopic vector and a first parameter of a predetermined numerical model on the one hand, and of the product of the noise flux and a second parameter of the numerical model on the other hand; and

• at least one second equation wherein each second spectrum is expressed as the sum of the product of the isotopic vector and a third parameter of the numerical model on the one hand, and of the product of the noise flux and a fourth parameter of the numerical model on the other hand;

the isotopic vector being a vector each component of index i of which represents a number of photons emitted by the source to be characterised, per unit of time, in an energy interval $E_i$ associated with said component of index i, said photons having interacted exclusively with the main detector (8) and having entirely deposited their energy in the main detector (8),

the noise flux being a vector each component of index i of which represents a number of photons, per unit of time, coming from the environment, in an energy interval $E_i$ associated with said component of index i, and incident on the detection stage (4),

the numerical model associating a given energy of an incident photon with:

• a main energy deposited by the incident photon in the main detector (8), the value of which is dependent on whether the incident photon comes from the source (3) to be characterised or from an environment distinct from the source (3); and

• an auxiliary energy deposited by the incident photon in each auxiliary detector (10), the value of which is dependent on whether the incident photon comes from the source (3) to be characterised or from the environment.

7. Computer program product comprising program code instructions which, when executed by a spectrometry system according to one of claims 1 to 5, implement the method according to claim 6.

FIG.1

FIG.2

**EP 3 629 063 B1**

## RÉFÉRENCES CITÉES DANS LA DESCRIPTION

**Documents brevets cités dans la description**

- US 2010090115 A1